(19) Europäisches Patentamt
European Patent Office
Office européen des brevets

(11) Veröffentlichungsnummer: **0 103 538**
**A2**

(12) # EUROPÄISCHE PATENTANMELDUNG

(21) Anmeldenummer: **83810342.2**

(22) Anmeldetag: **29.07.83**

(51) Int. Cl.³: **C 08 F 8/36**, C 07 B 13/02

(30) Priorität: **04.08.82 CH 4695/82**

(43) Veröffentlichungstag der Anmeldung: **21.03.84 Patentblatt 84/12**

(84) Benannte Vertragsstaaten: **DE FR GB NL**

(71) Anmelder: **CIBA-GEIGY AG, Postfach, CH-4002 Basel (CH)**

(72) Erfinder: **Kaschig, Jürgen, Dr., Rötebuckweg 30, D-7800 Freiburg (DE)**
Erfinder: **Lohmann, Dieter, Dr., Mittelweg 56, CH-4142 Münchenstein (CH)**
Erfinder: **Fankhauser, Peter, Dr., Hauptstrasse 65, CH-4107 Ettingen (CH)**

(54) **Vinylpyridincopolymere, Verfahren zu deren Herstellung und deren Verwendung als Sulfonierungsreagentien.**

(57) Neue Vinylpyridincopolymere, die aus Strukturelementen der Formeln I und II oder III

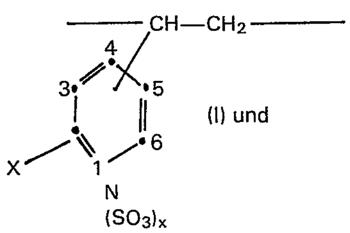

(I) und

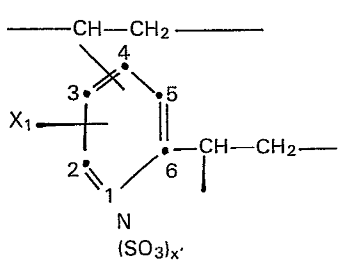

(II)

oder

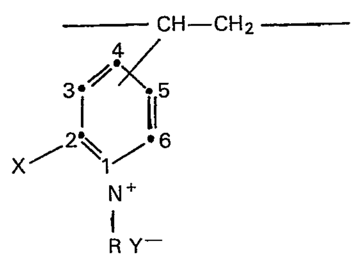

(III),

bestehen, worin X Wasserstoff oder Methyl, $X_1$ Wasserstoff oder in 2- oder 4-Stellung gebundenes Methyl, R $C_{1-18}$-Alkyl, $Y^-$ $CH_3SO_4^-$, Br- oder $HSO_4^-$ und x und x' unabhängig voneinander 0,8 bis 2 bedeuten, wobei die Gruppe $-\underset{|}{C}H-CH_2-$ in den Formeln I und III bei X = H in 4- oder 6-Stellung und bei X = Methyl in 5-Stellung gebunden ist, und die Gruppe $-\underset{|}{C}H-CH_2-$ in Formel II bei $X_1$ = H in 2-, 3- und/oder 4-Stellung, bei $X_1$ = in 2-Stellung gebundenes Methyl in 3- und/oder 4-Stellung und bei $X_1$ = in 4-Stellung gebundenes Methyl in 2-Stellung gebunden ist, eignen sich als Sulfonierungsreagentien, besonders zur C- und/oder O-Sulfonierung von aromatischen oder heterocyclischen Verbindungen in heterogener Phase.

EP 0 103 538 A2

CIBA-GEIGY AG
Basel (Schweiz)

6-14038/=

# Vinylpyridincopolymere, Verfahren zu deren Herstellung und deren Verwendung als Sulfonierungsreagentien

Die vorliegende Erfindung betrifft neue Vinylpyridincopolymere, ein Verfahren zu deren Herstellung und deren Verwendung als Sulfonierungsreagentien.

Gemäss U.S. Patentschrift 3.057.855 können wasserlösliche Poly(2-vinylpyridin)-$SO_3$-Addukte zur Sulfatierung von Polysacchariden, besonders Stärke, in wässrigem Medium, d.h. homogener Phase, verwendet werden. Die dabei entstehenden Polysaccharid-Schwefelsäurehalbester reagieren im wässrigen Reaktionsmedium unter Bildung von Salzen mindestens teilweise mit den freigewordenen Poly-(2-vinylpyridin)-Strukturelementen. Das Ausgangspolymere kann daher nur schwer zurückgewonnen und wieder verwendet werden. Gemäss dieser Literaturstelle wird das Poly(2-vinylpyridin) mit höchstens einem Mol $SO_3$ pro Pyridinstickstoffatom beladen. Gemäss der britischen Patentschrift 1.393.395 können Gemische aus Schwefeltrioxid und Schwefelsäuredämpfen aus Gasen, z.B. den Abgasen bei der Schwefelsäureherstellung, entfernt bzw. absorbiert werden, indem man diese Gase mit vernetzten makroporösen heterocyclischen Vinylpolymeren in Kontakt bringt. z.B. vernetzten Polymeren aus gegebenenfalls alkylsubstituierten Vinylpyridinen und verschiedenen ein- oder mehrfach ungesättigten Vernetzern. Die konkrete Offenbarung beschränkt sich auf ein Polymer aus 91% 4-Vinylpyridin vernetzt mit 7% Divinylbenzol und 2% Aethylvinylbenzol. Dieses Polymer hat eine Beladungskapazität für reines $SO_3$ von mindestens 7,0 Milliäquivalenten pro Gramm Harz. Bei der Absorption des $SO_3/H_2SO_4$ werden die Benzolringe der Comonomeren (Divinylbenzol und Aethylvinylbenzol sulfoniert

(bis zu ca. 1,22 $SO_3H$ pro Benzolring), was eine vollständige Zurückgewinnung des Ausgangspolymeren beträchtlich erschwert.

$SO_3$-Addukte von Poly(2-methyl-5-vinylpyridin) und des entsprechenden mit Divinylbenzol vernetzten Produktes werden auch in Kogyo Kagaku Zasshi, 65, 1658 (1962) beschrieben, wobei weniger als 50% d.Th. $SO_3$ umgesetzt bzw. angelagert werden. Für diese $SO_3$-Addukte ist keine Anwendung angegeben.

Schliesslich sind aus der spanischen Patentschrift 302.492 Copolymere aus Methylvinylpyridinen und Divinylbenzol als polymere Adsorbentien für $SO_2$ bekannt, die dessen Oxidation zu $SO_3$ beschleunigen.

Gegenstand der Erfindung sind neue Vinylpyridincopolymere mit erhöhter $SO_3$-Beladungskapazität, die mit verbesserter Effizienz sowohl für C- als auch für O-Sulfonierungen in heterogener Phase eingesetzt und nach der Sulfonierung leicht zurückgewonnen und erneut verwendet werden können.

Die erfindungsgemässen Polymeren bestehen aus Strukturelementen der Formeln I und II oder III

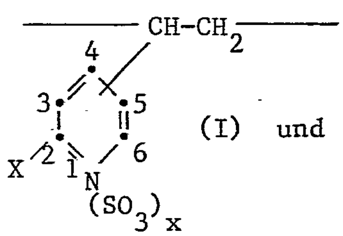

(I) und

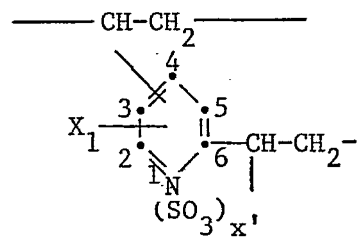

(II)

oder

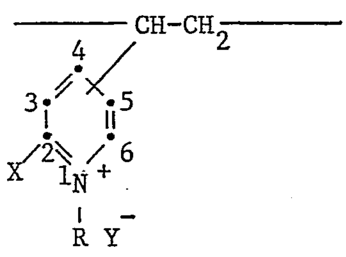

(III),

worin

X Wasserstoff oder Methyl,

$X_1$ Wasserstoff oder in 2- oder 4-Stellung gebundenes Methyl,
R $C_{1-18}$-Alkyl,
$Y^-$ $CH_3SO_4^-$, $Br^-$ oder $HSO_4^-$ und
x und x' unabhängig voneinander 0,8 bis 2 bedeuten,
wobei die Gruppe $-\overset{|}{C}H-CH_2-$ in den Formeln I und III bei X = Wasserstoff in 4- oder 6-Stellung und bei X = Methyl in 5-Stellung gebunden ist und die Gruppe $-\overset{|}{C}H-CH_2-$ in Formel II bei $X_1$ = H in 2-, 3- und/oder 4-Stellung, bei $X_1$ = in 2-Stellung gebundenes Methyl in 3- und/oder 4-Stellung und bei $X_1$ = in 4-Stellung gebundenes Methyl in 2-Stellung gebunden ist.

In den Strukturelementen der Formeln I und II oder III können die einzelnen X und x bzw. $X_1$, x', R und $Y^-$ dieselbe oder verschiedene Bedeutungen haben. Ferner können die Strukturelemente der Formeln I und II oder III blockartig oder statistisch angeordnet sein.

Alkylgruppen R können geradkettig oder verzweigt sein. Als Beispiele seien genannt: Methyl, Aethyl, n-Propyl, Isopropyl, n-Butyl, sek.-Butyl, tert.-Butyl, n-Pentyl, 2,2-Dimethylpropyl, n-Hexyl, n-Octyl, n-Decyl, n-Undecyl, n-Dodecyl, n-Tetradecyl, n-Hexadecyl und n-Octadecyl. Bevorzugt sind Alkylgruppen mit 1-4 C-Atomen, besonders geradkettiges $C_{1-4}$-Alkyl und vor allem Methyl oder Aethyl.

Der Anteil an Strukturelementen der Formel II in den erfindungsgemässen Polymeren beträgt zweckmässig höchstens 60%, bevorzugt bis 35% und insbesondere bis 30%, bezogen auf die Gesamtzahl der wiederkehrenden Strukturelemente. Bei den Strukturelementen der Formel III ist andererseits ein Anteil von höchstens 15% bevorzugt, insbesondere bis 10% und vor allem bis 8%, bezogen auf die Gesamtzahl der wiederkehrenden Strukturelemente.

Die erfindungsgemässen Polymeren sind Feststoffe. Sie weisen im Gegensatz zu üblichen technischen Sulfonierungsmitteln, wie freies $SO_3$ oder

rauchende Schwefelsäure, einen geringen $SO_3$-Dampfdruck auf und sind leicht zu handhaben. Sie können eine $SO_3$-Beladungskapazität von ca. 7,0 bis 15 Milliäquivalenten (mequiv) pro Gramm Harz aufweisen. Erfindungsgemässe Polymere mit x und/oder x' = grösser als 1 zeichnen sich durch eine besonders hohe Reaktivität aus. Wird bei der Sulfonierung mit solchen Polymeren (x und/oder x' = grösser als 1) nur der über 1 liegende Anteil an $SO_3$ umgesetzt, so entstehen freie Sulfonsäuren, die auf einfache Weise abgetrennt werden können. Wird bei der Sulfonierung sämtliches $SO_3$ umgesetzt, so werden die entstehenden Sulfonsäuren teilweise salzartig an die frei gewordenen Pyridinstrukturelemente gebunden. Diese Salze können jedoch in dem heterogenen Reaktionsgemisch auf einfache Weise in die freien Polyvinylpyridinharze übergeführt werden, z.B. durch Behandlung mit Alkali. Die so erhaltenen freien Polyvinylpyridinharze können erneut mit $SO_3$ beladen und für weitere Reaktionen eingesetzt werden.

Bevorzugt sind erfindungsgemässe Polymere in Perlenform, besonders solche mit poröser bis makroporöser Struktur.

$Y^-$ ist vorzugsweise $CH_3SO_4^-$ oder $Br^-$. x und x' stellen bevorzugt unabhängig voneinander eine Zahl grösser als 1, insbesondere 1,2 bis 1,7 dar.
Das spezifische Porenvolumen liegt zweckmässig zwischen etwa 0,20 und 5,0 ml/g. Die spezifische Oberfläche der Perlen kann innerhalb relativ breiter Grenzen variieren und beträgt vorzugsweise 0,2 bis 200 $m^2/g$, besonders 2 bis 100 $m^2/g$.

Bevorzugt sind einerseits Polymere, die aus Strukturelementen der Formel Ia und IIIa

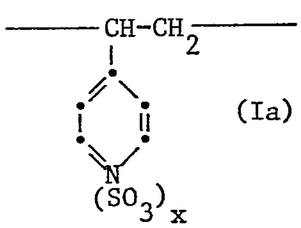 (Ia) und 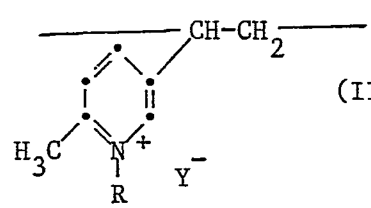 (IIIa)

sowie gegebenenfalls Strukturelementen der Formel Ib

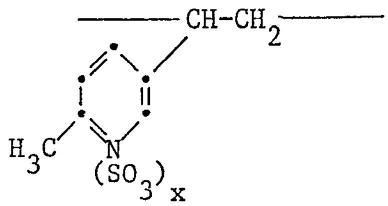

(Ib)

bestehen, worin R Methyl oder Aethyl, $Y^-$ $CH_3SO_3^-$ oder $Br^-$ und x 1,2 bis 1,7 bedeuten.

Besonders bevorzugt sind vernetzte Polymere, die aus Strukturelementen der Formel Ia und Strukturelementen der Formel IIa und/oder IIb

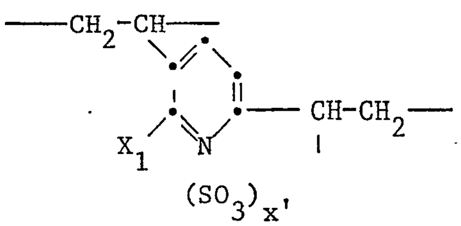

(IIa) und/oder

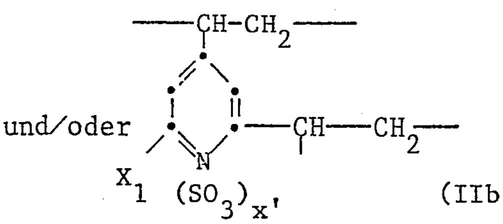

(IIb)

und gegebenenfalls Strukturelementen der Formel Ib bestehen, worin x und x' unabhängig voneinander 1,2 bis 1,7 bedeuten und $X_1$ Wasserstoff oder Methyl ist.

Die erfindungsgemässen Polymeren können auf an sich bekannte Weise hergestellt werden, z.B. indem man Polymere aus wiederkehrenden Strukturelementen der Formeln I' und II' oder III'

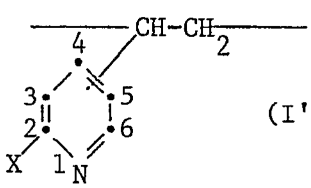

(I') und

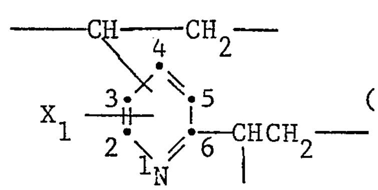

(II')

oder

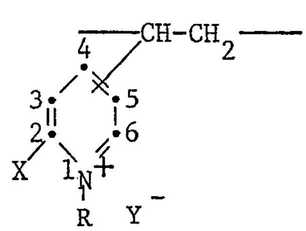

(III'),

worin für R, $Y^-$, X und $X_1$ sowie die Stellung der Gruppen $-\overset{|}{C}H-CH_2-$ das unter den Formeln I, II und III Angegebene gilt, mit Schwefeltrioxid in Kontakt bringt. Gemäss einer ersten Ausführungsform wird eine Suspension des Ausgangspolymeren in einem inerten organischen Lösungsmittel, bevorzugt einem halogenierten aliphatischen Kohlenwasserstoff, wie 1,1,2-Trichlortrifluoräthan, Dichlormethan, Dichloräthan oder Tetrachlorkohlenstoff, mit $SO_3$-Gas oder vorzugsweise einer Lösung des Schwefeltrioxids mit einem geeigneten inerten organischen Lösungsmittel in Kontakt gebracht. Als solche eignen sich vor allem flüssiges Schwefeldioxid oder halogenierte Kohlenwasserstoffe der oben erwähnten Art.

Besonders bevorzugt wird das Ausgangspolymere in trockener Form, zweckmässig in Pulver- oder Perlenform, mit $SO_3$-Gas in Berührung gebracht, z.B. nach dem Wirbelschichtverfahren. Dabei kann es unter Umständen zweckmässig sein, das $SO_3$-Gas mit einem Inertgas, wie Stickstoff, zu verdünnen.

Die noch nicht mit $SO_3$ beladenen Ausgangspolymeren können ebenfalls in an sich bekannter Weise durch Copolymerisation von gleichen oder verschiedenen Monomeren der Formel IV

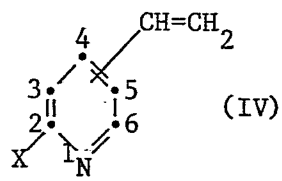

(IV) mit Monomeren der Formel V oder VI

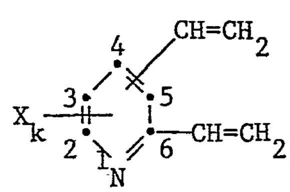

(V) oder

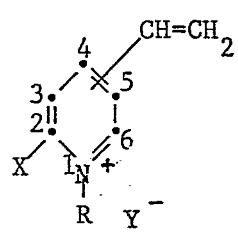

(VI)

in den gewünschten Mengenverhältnissen hergestellt werden. Dabei gilt für R, $Y^-$, X und $X_1$ sowie die Stellung der Vinylgruppen sinngemäss das oben Angegebene. Bevorzugt werden die Ausgangspolymeren durch Suspensionspolymerisation hergestellt, z.B. nach den für die Herstellung von

Ionenaustauschharzen üblichen Verfahren. Die Monomeren der Formeln IV und VI sind bekannt oder können nach an sich bekannten Methoden hergestellt werden. Divinylpyridine der Formel V mit $X_1$ = H sowie das 4,6-Divinyl-2-methylpyridin sind ebenfalls bekannt. Divinylpyridine der Formel V mit $X_1$ = Methyl können auch dadurch hergestellt werden, dass man Acetonitril in Gegenwart eines Kobalt(I)-Katalysators mit z.B. Propargylalkohol co-cyclotrimerisiert, die erhaltenen Bis-Hydroxymethylpyridine in die entsprechenden Bis-Halogenmethylpyridine überführt, diese mit Triarylphosphinen, z.B. Triphenylphosphin, oder Trialkylphosphiten umsetzt und die erhaltenen Pyridinphosphoniumsalze oder Pyridinphosphonsäure-tetraalkylester einer Wittig- oder Wittig-Horner-Reaktion mit Formaldehyd unterwirft.

Die erfindungsgemässen Polymeren eignen sich - wie eingangs erwähnt - als Sulfonierungsreagentien, vor allem zur C- und/oder O-Sulfonierung an sich beliebiger organischer Verbindungen, besonders zur C und/oder O-Sulfonierung von aromatischen oder heterocyclischen Verbindungen in heterogener Phase. Dabei wird zweckmässig eine Lösung der zu sulfonierenden Verbindung mit dem bevorzugt in Perlenform vorliegenden Polymeren in Kontakt gebracht, z.B. indem man die Lösung der zu sulfonierenden Verbindung im Durchflussverfahren durch eine mit dem Polymeren gefüllte Kolonne leitet.

Geeignete aromatische oder heterocyclische Verbindungen zur C-Sulfonierung sind beispielsweise gegebenenfalls substituierte Phenole, Naphthole, Naphthaline, Anthracene, Pyrrole und Furane.

Für O-Sulfonierungen kommen organische Verbindungen mit Hydroxygruppen, z.B. Kohlehydrate der in der US Patentschrift 3.057.855 beschriebenen Art, in Betracht. Bevorzugt werden die erfindungsgemässen Polymeren für C-Sulfonierungen eingesetzt.

Beispiel 1a: Perpolymerisat aus 4-Vinylpyridin und Divinylpicolinen.

In einem Glasreaktor wird eine Lösung aus 2,75 g Polyvinylalkohol in 150 ml Wasser vorgelegt. Das Gefäss wird durch Anlegen von Vakuum und Belüften mit Stickstoff von Luftsauerstoff freigemacht, und die Lösung wird auf 80°C erwärmt. In feinem Strahl lässt man eine Mischung aus 17,2 g (0,164 Mol) frisch destilliertem 4-Vinylpyridin, 6,7 g (0,046 Mol) frisch destillierten Divinylpicolinen (Gemisch aus 2-Methyl-4,6- und -3,6-divinylpyridin), 0,5 g (3,05 x $10^{-3}$ Mol) Azobis-isobutyronitril sowie 15 ml Toluol unter Rühren zulaufen. Unter Rühren (400 Umdrehungen/Minute) und Einleiten von Stickstoff wird 20 Stunden bei 80°C und anschliessend 2 Stunden bei 95°C polymerisiert. Mittels Wasserdampf werden das Toluol und Restmonomere abdestilliert. Die entstandenen weissen Polymerperlen werden abfiltriert und nacheinander mit 200 ml Wasser (viermal), 200 ml Aceton (viermal) und 250 ml Methylenchlorid (zweimal) gewaschen. Das Produkt wird bei 13000 Pa vorgetrocknet und anschliessend 20 Stunden bei 60°C und 1,3 Pa über Phosphorpentoxid nachgetrocknet. Spezifische Oberfläche (BET): 63 $m^2/g$; spezifisches Porenvolumen: 0,70 ml/g.

Beispiel 1b: Gemäss Beispiel 1a werden 4-Vinylpyridin (60 Mol%) und Divinylpicolin (40 Mol%) copolymerisiert. Das erhaltene getrocknete Perpolymerisat wird gesiebt. Die Hauptfraktion (64 Gew.%) besteht aus Perlen mit 25-56 µm Durchmesser. Spezifische Oberfläche (BET):230 $m^2/g$.

Die in den obigen Beispielen verwendeten Gemische aus 2-Methyl-4,6- und -3,6-divinylpyridin können wie folgt hergestellt werden:

Eine Lösung aus 492 g (12 Mol) Acetonitril, 168 g (3 Mol) Propargylalkohol sowie 4,5 g (0,0195 Mol) Cyclopentadienyl-Kobalt-cycloocta-(1,5)-dien wird in einem 1-Liter-Stahlautoklaven unter Stickstoffatmosphäre innerhalb 3 Stunden auf 145°C erwärmt, wobei der Druck auf ca. 8 x $10^5$ Pa steigt. Nach 7 Stunden wird auf Raumtemperatur abgekühlt. Ueberschüssiges Acetonitril wird bei ca. 1,5 x $10^3$ Pa abdestilliert. Das Rohprodukt wird in halbkonzentrierter Salzsäure gelöst (pH 1), mit

ca. dem gleichen Volumen Chloroform versetzt und unter Zusatz von Aktivkohle 3 Stunden zum Sieden erhitzt. Nach dem Abkühlen wird filtriert und von der Chloroformphase abgetrennt. Die Wasserphase wird mittels Kaliumcarbonat alkalisch gestellt und bei ca. $1,5 \times 10^3$ Pa eingedampft. Nach Zusatz von Toluol wird durch azeotrope Destillation bei ca. $2 \times 10^3$ Pa restliches Wasser entfernt. Der Rückstand wird dreimal mit je 250 ml Aethanol bei 60 bis 70°C extrahiert. Die verbleibenden Salze werden abfiltriert und die vereinigten Filtrate bei $1,5 \times 10^3$ Pa eingeengt. Der Rückstand wird im Hochvakuum destilliert. Sdp. 168-180°C/$1,33 \times 10^{-3}$Pa. Ausbeute 165 g (71,8% d.Th.) Isomerengemisch aus 2- Methyl-4,6- und -3,6-bis(hydroxymethyl)pyridin. Das Isomerenverhältnis wird gaschromatographisch bestimmt (Kapillarsäule: K20M; 35,4m):57% 2-Methyl-4,6-bis(hydroxymethyl)pyridin und 43% 2-Methyl-3,6-bis(hydroxymethyl)pyridin.

77,4 g (0,5 Mol) des obigen Isomerengemisches werden in 270 ml Bromwasserstoffsäure (62%ig) gelöst und 20 Stunden zum Sieden erhitzt. Anschliessend wird das Reaktionsgemisch mit 400 ml Wasser verdünnt und bei $1,5 \times 10^3$ Pa eingeengt. Der Rückstand wird in 250 ml Wasser gelöst und die Lösung mit 400 ml Diäthyläther überschichtet. Die Wasserphase wird durch Eintragen von festem Kaliumcarbonat unter starkem Rühren alkalisch gestellt (pH 8). Die Aetherphase wird abgetrennt, und die Wasserphase wird mit Diäthyläther nachgewaschen. Die vereinigten Aetherphasen werden über Natriumsulfat getrocknet und bei $1,5 \times 10^3$ Pa eingeengt. Man erhält 124 g (89% d.Th.) eines öligen Produkts, welches bei 4°C zu einer halbkristallinen Masse erstarrt. Picrolonat des erhaltenen Gemisches aus 2-Methyl-4,6- und -3,6-bis-(brommethyl)-pyridin: Fp. 143-144°C.

Eine Lösung aus 630 g (2,4 Mol) Triphenylphosphin und 1,5 l N,N-Dimethylformamid wird auf 80°C erhitzt. Es wird eine Lösung aus 279 g des Gemisches aus 2-Methyl-4,6- und -3,6-bis-(brommethyl)-pyridin und 500 ml N,N-Dimethylformamid zugetropft. Nach 3 Stunden Rühren bei 80°C wird auf Raumtemperatur abgekühlt. Im Verlaufe einiger Stunden bilden sich feine Kristalle. Diese werden abgesaugt, mit 200 ml kaltem N,N-

Dimethylformamid sowie 2 l Diäthyläther gewaschen und aus Wasser umkristallisiert; Ausbeute 215 g. Die Mutterlauge wird bei 1,5 x $10^3$ Pa weitgehend vom Lösungsmittel befreit und der Rückstand in Dichlormethan gelöst. Die Lösung wird in Diäthyläther eingerührt, wobei weiteres Produkt als feinpulvriger Niederschlag ausfällt. Ausbeute 479 g Isomerengemisch aus [2-Methylpyridin-3,6-diyl-bis(methylen)]bistriphenylphosphoniumdibromid und [2-Methyl-pyridin-4,6-diyl-bis(methylen)]bistriphenylphosphoniumdibromid. $^1$H-NMR ($CDCl_3$): $\delta$ = 1,61 und 1,97 (s; 3H), 5,33 und 5,61 (d, J=15 HZ; 4H) und 7,32 bis 8,00 ppm (m, 32 arom.H). Gesamtausbeute 86,4% d.Th.

Zu einer Mischung aus 371 g (0,43 Mol) der obigen Bis-phosphoniumsalze (Isomerengemisch), 2,5 l wässriger Formaldehydlösung (38%ig), 2 Liter Dichlormethan sowie 2 g Tetrabutylammoniumcyanid wird unter schnellem Rühren eine Lösung aus 250 g Natriumhydroxid und 500 ml Wasser innerhalb 1,5 Stunden zugetropft. Dabei wird die Temperatur auf 15°C gehalten. Nach 16 Stunden Rühren bei Raumtemperatur wird die organische Phase abgetrennt und die wässrige Phase mit 500 ml Dichlormethan nachgewaschen. Die vereinigten organischen Phasen werden mit 3 l Wasser gewaschen, mit 200 mg Di-tert.-butyl-p-kresol versetzt und bei 1,5 x $10^3$ Pa eingeengt. Der halbfeste Rückstand wird mit 3,0 l Salzsäure (ca. 10%ig) verrührt. Es wird zweimal mit je 1200 ml Essigsäureäthylester extrahiert und die wässrige Phase mit 200 mg Di-tert.-butyl-p-kresol sowie 1500 ml Essigsäureäthylester versetzt. Anschliessend wird mittels festen Kaliumcarbonat alkalisch gestellt und die organische Phase abgetrennt. Nach Trocknen über Natriumsulfat und Einengen bei 1,5 x $10^3$ Pa wird das flüssige Rohprodukt destilliert. Man erhält 39,6 g (63,5% d.Th.) eines Gemisches aus 2-Methyl-4,6- und -3,6-divinylpyridin (ca. 57:43 Teile); Sdp. 40-48°C/20 Pa.

Beispiel 2: Perlpolymerisat aus 4-Vinylpyridin und 2,5-Divinylpyridin.

Analog der in Beispiel 1 beschriebenen Verfahrensweise werden 73 Gew.% 4-Vinylpyridin mit 27 Gew.% 2,5-Divinylpyridin copolymerisiert. Es wird ein weisses Perlpolymerisat erhalten; spezifische Oberfläche (BET) 44 $m^2$/g.

Beispiel 3: Perlpolymerisat aus 4-Vinylpyridin, 2-Methyl-5-vinylpyridin und Divinylpicolinen.

In einem Glasreaktor wird eine Lösung aus 1,6 g Poly-(1-äthyl-2-methyl-5-vinylpyridiniumbromid) in 210 ml Wasser vorgelegt und auf 60°C erwärmt. Nach dem Spülen mit Stickstoff wird eine Lösung aus 37,1 g (0,353 Mol) frisch destilliertem 4-Vinylpyridin, 3,81 g (0,032 Mol) frisch destilliertem 2-Methyl-5-vinylpyridin und 1,16 g (0,008 Mol) frisch destillierten Divinylpicolinen (gleiches Gemisch wie in Beispiel 1 beschrieben) zugegeben. Die Mischung wird gerührt (500 Umdrehungen/Minute) und eine Lösung aus 0,34 g Kaliumperoxidisulfat, 0,27 g Natriumhydrogensulfit und 25 ml Wasser im Verlaufe einer Stunde zudosiert. Nach 2 Stunden wird nochmals die gleiche Menge Kaliumperoxididulfat und Natriumhydrogensulfit zugegeben, und der Vorgang nach weiteren 2 Stunden wiederholt. Nach anschliessender 15stündiger Polymerisation bei 60°C werden Restmonomere mittels Wasserdampfdestillation entfernt, und die überstehende Wasserphase wird von dem Perlpolymerisat abdekantiert. Das Produkt wird durch mehrmaliges Versetzen mit ca. 700 ml Wasser und Dekantieren gewaschen und anschliessend bei 60°C/13000 Pa vorgetrocknet. Restliches Wasser wird durch Trocknen über Phosphorpentoxid bei 70°C/1,3 Pa entfernt. Spezifische Oberfläche (BET) 0,5 $m^2$/g; spezifisches Porenvolumen 0,37 ml/g.

Beispiel 4: Perlpolymerisat aus 4-Vinylpyridin, 2-Methyl-5-vinylpyridin und 1,2-Dimethyl-5-vinylpyridiniummethylsulfat.

In einem Glasreaktor wird eine Lösung aus 5,73 g (0,0234 Mol) 1,2-Dimethyl-5-vinylpyridiniummethylsulfat und 206 ml Wasser vorgelegt und auf 60°C erwärmt. Nach dem Spülen mit Stickstoff wird unter Rühren (250 Umdrehungen/Minute) eine Mischung aus 33,37 g (0,317 Mol) frisch destilliertem 4-Vinylpyridin und 4,53 g (0,038 Mol) frisch destilliertem 2-Methyl-5-vinyl-pyridin zugegeben. Im Verlaufe einer Stunde wird eine Lösung aus 0,34 g Kaliumperoxidisulfat sowie 0,27 g Natriumhydrogensulfit in 25 ml Wasser zugepumpt. Nach 4,5 Stunden Rühren (250 Umdrehungen/Minute) bei 60°C und unter Einleitung von Stickstoff werden

Restmonomere mittels Wasserdampf abdestilliert. Die überstehende milchige Suspension wird von dem Perlpolymerisat dekantiert und das Produkt anschliessend durch mehrmaliges Aufschlämmen in Wasser und Dekantieren gewaschen. Das Produkt wird gefriergetrocknet und anschliessend bei 60°C/1,3 Pa über Phosphorpentoxid nachgetrocknet. Spezifische Oberfläche (BET) 7,6 $m^2/g$; spez. Porenvolumen 2,63 ml/g.

Beispiele 5-7: Analog der in Beispiel 4 beschriebenen Arbeitsweise werden Perlpolymerisate aus 4-Vinylpyridin, 2-Methyl-5-vinylpyridin und 1-Aethyl-2-methyl-5-vinylpyridiniumbromid hergestellt. Die eingesetzten Mengen an Monomeren und die weiteren Reaktionsbedingungen sind untenstehend angegeben.

| | Beispiel 5 | Beispiel 6 | Beispiel 7 |
|---|---|---|---|
| 4-Vinylpyridin | 0,500 Mol | 0,375 Mol | 0,462 Mol |
| 2-Methyl-5-vinylpyridin | 0,500 Mol | 0,125 Mol | 0,055 Mol |
| 1-Aethyl-2-methyl-5-vinylpyridiniumbromid | 0,080 Mol | 0,040 Mol | 0,039 Mol |
| Kaliumperoxidisulfat | 1,0 g | 0,5 g | 0,5 g |
| Natriumhydrogensulfit | 0,8 g | 0,4 g | 0,4 g |
| Wasser | 600 ml | 300 ml | 300 ml |
| spezifische Oberfläche (BET) | nicht gemessen | 6,3 $m^2/g$ | 3,2 $m^2/g$ |
| spez. Porenvolumen | " | 3,09 ml/g | 0,90 ml/g. |

Beispiele 8-14: Additionsverbindungen aus Schwefeltrioxid und Vinylpyridin-Perlpolymerisaten nach dem Wirbelschichtverfahren.

Ein offener Vorratsbehälter mit flüssigem Schwefeltrioxid wird in einem Glasgefäss, das mit Schliffranddeckel, Gasein- und -auslassöffnung versehen ist, auf 50°C temperiert. Ueber die Oberfläche des Schwefeltrioxids wird mit einer Strömungsgeschwindigkeit von ca. 2 l/Minute ein Strom trockenen Stickstoffs geleitet. Das austretende Gasgemisch

wird in ein Adsorptionsgefäss eingeleitet. Hier durchströmt es eine Glasfritte und kommt mit dem darüberliegenden Füllgut aus Vinylpyridin-Perlpolymerisat in Kontakt. Das Füllgut wird dabei mehr oder weniger stark aufgewirbelt. Das austretende Gas wird durch einen mit halbkonzentrierter Schwefelsäure gefüllten Gaswäscher abgeleitet. Am Ende der Beladungszeit wird der Schwefeltrioxid-Gasfluss unterbrochen und das erhaltene Harz ca. 18 Stunden mit reinem Stickstoff durchspült, um nur physikalisch adsorbiertes Schwefeltrioxid zu desorbieren. In der folgenden Tabelle I sind die zur Herstellung der verschiedenen mit Schwefeltrioxid beladenen Polyvinylpyridinharze und die Reaktionsbedingungen angegeben.

Tabelle I

| Beispiel Nr | Ausgangspolymer gemäss Beispiel Nr. | Ansatz g | Beladungszeit (h) | Ausbeute g | Beladungskapazität mequiv./g a) | Molzahl $SO_3$ pro Pyridylrest b) | Morphologie/ Aspekt |
|---|---|---|---|---|---|---|---|
| 8 | 1 | 8,0 | 3 | 16,2 | 12,8 | 1,43 | makroporös ,grau |
| 9 | 2 | 4,0 | 4 | 8,5 | 14,1 | 1,68 | makroporös,schwarz |
| 10 | 3 | 10,0 | 6 | 17,1 | 8,9 | 1,09 | porös, beige |
| 11 | 4 | 6,2 | 5 | 12,1 | 11,9 | 1,03 | porös. beige |
| 12 | 5 | 7,0 | 6 | 15,2 | 14,6 | 1,62 | do. |
| 13 | 6 | 7,0 | 7 | 15,1 | 14,5 | 1,68 | do. |
| 14 | 7 | 10,0 | 5 | 16,2 | 7,7 | 0,82 | do. |

a) bezogen auf Vinylpyridin-Perlpolymerisat

b). durch Elementaranalyse bestimmt.

Beispiele 15-16: An den Ausgangspolymeren gemäss den Beispielen 4 und 6 wird die Zeitabhängigkeit der Schwefeltrioxid-Adsorption sowie das Ausmass der Desorption gemessen.

| | Beispiel 15 (Polymer nach Beispiel 4) | | | | | | Beispiel 16 (Polymer nach Beispiel 6) | | | | | | |
|---|---|---|---|---|---|---|---|---|---|---|---|---|---|
| Beladungszeit (Min). | 10 | 20 | 50 | 80 | 140 | 290 | 10 | 35 | 65 | 95 | 155 | 275 | 395 |
| Gasvolumen (1) | 20 | 40 | 110 | 169 | 290 | 538 | 17 | 70 | 126 | 192 | 322 | 556 | 784 |
| Gewichtszunahme (%) | 28 | 60 | 76 | 81 | 84 | 95 | 43 | 77 | 104 | 119 | 131 | 154 | 163 |
| Desorption (%) | 25 | | | | | | 30 | | | | | | |

Beispiel 17: Additionsverbindung aus Schwefeltrioxid und makroporösem Vinylpyridin-Perlpolymerisat (unter Verwendung von Lösungsmittel).

a) 5,0 g des gemäss Beispiel 2 hergestellten Polymerisats (44,9 mMol Pyridylreste) werden in 40 ml Trichlorätylen suspendiert. Nach 30 Minuten werden unter Feuchtigkeitsausschluss 20 ml (50 mMol) einer 0,25 molaren Lösung von Schwefeltrioxid in Tetrachlorkohlenstoff zugetropft. Die Mischung wird 15 Minuten zum Sieden erhitzt. Nach dem Abkühlen auf Raumtemperatur wird unter Feuchtigkeitsausschluss filtriert, der Filterrückstand wird mit Trichloräthylen gewaschen und erneut in Trichloräthylen (100 ml) suspendiert. Nach dem Erhitzen auf Siedetemperatur und dem Abkühlen wird wiederum abgesaugt und mit Trichloräthylen nachgewaschen. Die erhaltenen grauen Perlen werden bei 30°C und 13000 Pa vorgetrocknet und anschliessend bei 30-40°C und 1,3 Pa nachgetrocknet. Ausbeute 8,0 g. $SO_3$-Aufnahme: 7,5 mequiv./g Vinylpyridin-Perlpolymerisat; Molzahl $SO_3$ pro Pyridylrest: 0,83.

b) 7,5 g des gemäss a) erhaltenen Harzes werden in 20 ml Dichloräthan suspendiert. Unter Feuchtigkeitsausschluss werden 40 ml der Schwefeltrioxidlösung zugetropft. Nach 1-stündigem Kochen unter Rückfluss und anschliessendem Abkühlen wird unter Feuchtigskeitsausschluss abgesaugt,

und das Harz wird viermal mit je 200 ml Dichloräthan gewaschen. Anschliessend wird das erhaltene Produkt wie unter a) angegeben getrocknet. Ausbeute 9,8 g. $SO_3$-Aufnahme (total) 13,6 mequiv./g Vinylpyridinperlpolymerisat; Molzahl $SO_3$ pro Pyridylrest: 1,52.

Beispiele 18-22: Sulfonierung von 2,5 Dimethylfuran.

1 g des gemäss Beispiel 13 erhaltenen Harzes wird unter Feuchtigkeitsausschluss mit 0,121 g ($1,26 \times 10^{-3}$ Mol) 2,5-Dimethylfuran, gelöst in 5 ml der in der folgenden Tabelle II angegebenen Lösungsmittel versetzt. Nach der in Tabelle II angegebenen Reaktionszeit wird die überstehende Lösung dekantiert (Aufarbeitungsmethode A). Mittels Hochleistungs-Flüssigchromatographie (HPLC = high performance liquid chromatography) wird der vollständige Umsatz des 2,5-Dimethylfurans bestätigt sowie der Gehalt an 2,5-Dimethylfuran-3-sulfonsäure und 2,5-Dimethylfuran-3,4-disulfonsäure ermittelt. Als Referenzchromatogramm dienen die Chromatogramme der gemäss Beispielen 23 und 24 erhaltenen Präparate. Das Harz wird unter Eiskühlung mit 40 ml Wasser versetzt und unter Zugabe von Kaliumcarbonat alkalisch gestellt (Aufarbeitungsmethode B). Nach 1 Stunde Rühren wird abfiltriert, mit Wasser nachgewaschen und das Filtrat wird bei 2500 Pa auf ca. 10 ml eingeengt. Die Sulfonsäuren werden mit einem sauren Ionenaustauscher (Dowex 50 Wx8 ® der Firma Dow Chemical Co.) freigesetzt. Mittels HPLC wird der Gehalt an Mono- und Disulfonsäure bestimmt. Das zurückbleibende Harz kann erneut mit $SO_3$ beladen und für weitere Reaktionen eingesetzt werden. Die Resultate und die Reaktionsbedingungen sind in der folgenden Tabelle II zusammengefasst.

Tabelle II

| Beispiel Nr. | Reaktions-medium | Reaktions-zeit (h) | Tempera-tur (°C) | Aufarbeitungsmethode A | | Aufarbeitungsmethode B | |
|---|---|---|---|---|---|---|---|
| | | | | Monosulfon-säure | Disulfon-säure | Monosulfon-säure | Dilsulfon-säure |
| 18 | Sulfolan | 1 | 100 | 52,0% | 17,7% | 39,6% | 46,6% |
| 19 | Triäthyl-phosphat | 1 | 100 | 74,9% | < 1% | 84,0% | < 1% |
| 20 | Dioxan | 1 | 65 | 69,8% | < 1% | nicht ge-messen | nicht ge-messen |
| | | 21 | 65 | 63,7% | 20,4% | 58,6% | 10,3% |
| 21 | Dichloräthan | 21 | 65 | 11,1% | 62,9% | 10,0% | 79,8% |
| 22 | Isopar L® (Gemisch verzweigter Paraffinkohlenwasserstoffe von ESSO) | 21 | 65 | 2% | < 2% | < 5% | 89,3% |

Beispiel 23: 2,5-Dimethylfuran-3-sulfonsäure.

1 g Bariumsalz der 2,5-Dimethylfuran-3-sulfonsäure wird zusammen mit einem sauren Ionenaustauscher (Dowex 50Wx8) in Wasser suspendiert. Dabei geht das Salz vollständig unter Freisetzung der Sulfonsäure in Lösung. Der Ionenaustauscher wird abfiltriert, und das Filtrat wird bei 2000 Pa und 30-40°C eingedampft. Das verbleibende braune Oel wird bei 1,5 Pa und 25°C getrocknet und unter Kühlung aufbewahrt. Das $^1H$-NMR-Spektrum ($CDCl_3$) ist in Einklang mit der erwarteten Struktur: $\delta$= 2,23 (s, 3H), 2,45 (s, 3H) und 6,15 (s, 1H) ppm.

Beispiel 24: 2,5-Dimethylfuran-3,4-disulfonsäure.

Analog Beispiel 23 wird 1 g Bariumsalz der 2,5-Dimethylfuran-3,4-disulfonsäure umgesetzt. Nach dem Einengen und Abkühlen auf ca. 0°C werden Kristalle erhalten, welche abgesaugt und mit wenig kaltem Wasser gewaschen werden. Das erhaltene Produkt wird bei 1,5 Pa und 25°C getrocknet. Smp. der 2,5-Dimethylfuran-3,4-disulfonsäure (Dihydrat) 89-92°C.

Elementaranalyse für $C_6H_8O_7S_2 \cdot H_2O$:

| | | | |
|---|---|---|---|
| berechnet | C 24,66% | H 4,14% | S 21,94% |
| gefunden | C 24,9% | H 4,4% | S 20,6%. |

$^1H$-NMR ($D_2O$): $\delta$ = 2,73 (s) und 5,41 (s, HDO) ppm.

Beispiel 25: Sulfonierung von 2,5-Dimethylfuran nach dem Durchflussverfahren.

Eine Chromatographiersäule mit einem Innendurchmesser von 9 mm und einer Länge von 200 mm wird mit dem gemäss Beispiel 9 hergestellten Harz gefüllt und mit Dichloräthan durchgespült. Es werden ca. 0,5 g 2,5-Dimethylfuran aufgetragen, und das Eluat wird in geschlossenem Kreislauf ca. 4 Stunden umgepumpt. Die erhaltene dunkelrote Lösung wird bei 2500 Pa eingedampft. Man erhält ein teilkristallines Oel, das gemäss HPLC aus 2,5-Dimethyl-3-sulfonsäure und 2,5-Dimethyl-3,4-disulfonsäure besteht.

Patentansprüche

1. Polymere, die aus Strukturelementen der Formeln I und II oder III

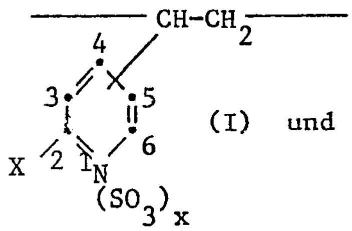 (I) und 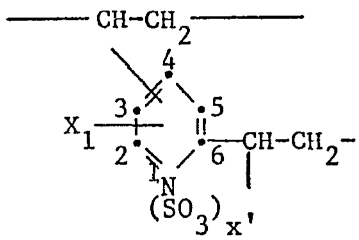 (II)

oder 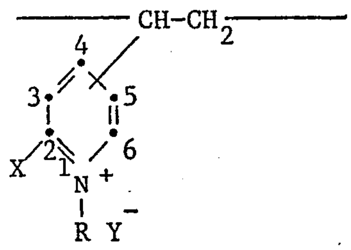 (III),

bestehen, worin

X Wasserstoff oder Methyl,

$X_1$ Wasserstoff oder in 2- oder 4-Stellung gebundenes Methyl,

R $C_{1-18}$-Alkyl,

$Y^-$ $CH_3SO_4^-$, $Br^-$ oder $HSO^-$ und

x und x' unabhängig voneinander 0,8 bis 2 bedeuten,

wobei die Gruppe $-\underset{|}{C}H-CH_2-$ in den Formeln I und III bei X = Wasserstoff in 4- oder 6-Stellung und bei X = Methyl in 5-Stellung gebunden ist, und die Gruppe $-\underset{|}{C}H-CH_2-$ in Formel II bei $X_1$ = H in 2-, 3- und/oder 4-Stellung, bei $X_1$ = in 2-Stellung gebundenes Methyl in 3- und/oder 4-Stellung und bei $X_1$ = in 4-Stellung gebundenes Methyl in 2- Stellung gebunden ist.

2. Polymere nach Anspruch 1, worin der Anteil an Strukturelementen der Formel II höchstens 60% und bevorzugt bis 35%, bezogen auf die Gesamtzahl der wiederkehrenden Strukturelemente, beträgt.

3. Polymere nach Anspruch 1, worin der Anteil an Strukturelementen der Formel III höchstens 15% und bevorzugt bis 10%, bezogen auf die Gesamtzahl der wiederkehrenden Strukturelemente, beträgt.

4. Polymere nach Anspruch 1, worin R $C_{1-4}$-Alkyl und $Y^-$ $CH_3SO_4^-$ oder $Br^-$ bedeuten.

5. Polymere nach Anspruch 1, worin x und x' unabhängig voneinander 1,2 bis 1,7 darstellen.

6. Polymere nach Anspruch 1, die aus Strukturelementen der Formel Ia und IIIa

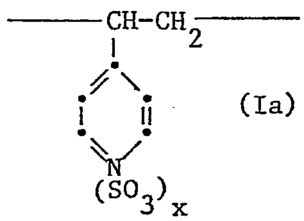 (Ia) und 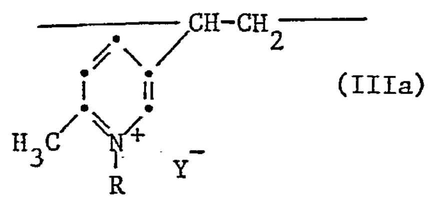 (IIIa)

sowie gegebenenfalls Strukturelementen der Formel Ib

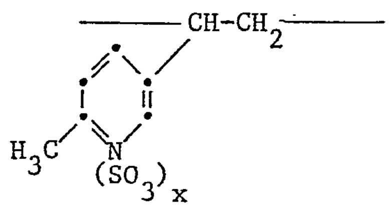 (Ib)

bestehen, worin R Methyl oder Aethyl, $Y^-$ $CH_3SO_3^-$ oder $Br^-$ und x 1,2 bis 1,7 bedeuten.

7. Polymere nach Anspruch 1, die aus Strukturelementen der Formel Ia

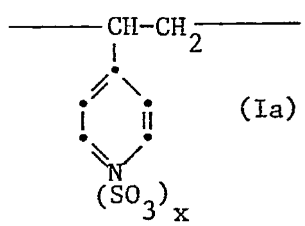 (Ia)

und Strukturelementen der Formel IIa und/oder IIb

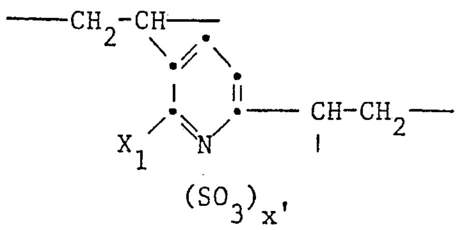 (IIa) und/oder 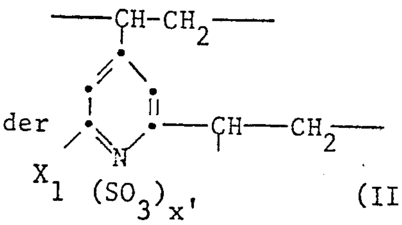 (IIb)

sowie gegebenenfalls Strukturelementen der Formel Ib

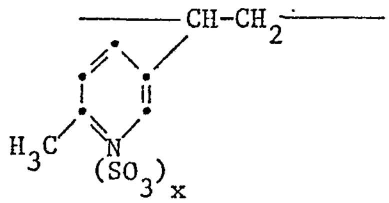 (Ib)

bestehen, worin x und x' unabhängig voneinander 1,2 bis 1,7 bedeuten und $X_1$ Wasserstoff oder Methyl ist.

8. Verfahren zur Herstellung von Polymeren nach Anspruch 1, dadurch gekennzeichnet, dass man Polymere aus wiederkehrenden Strukturelementen der Formeln I' und II' oder III'

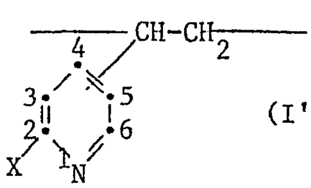 (I') und 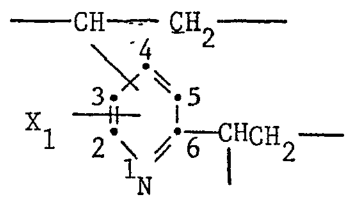 (II')

oder 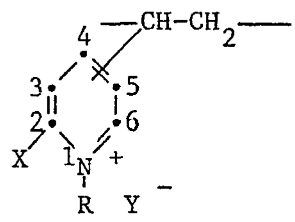 (III'),

worin für R, $Y^-$, X und $X_1$ sowie die Stellung der Gruppen $-\overset{|}{C}H-CH_2-$ das im Anspruch 1 Angegebene gilt, mit Schwefeltrioxid in Kontakt bringt.

9. Verfahren nach Anspruch 8, dadurch gekennzeichnet, dass man das Polymere in trockener Form mit $SO_3$-Gas in Berührung bringt.

10. Verwendung der Polymeren nach Anspruch 1 als Sulfonierungsreagentien, besonders zur C- und/oder O-Sulfonierung von aromatischen oder heterocyclischen Verbindungen in heterogener Phase, indem man eine Lösung der zu sulfonierenden Verbindung mit dem Polymeren in Kontakt bringt.

FO 7.3/HO/gs*